# EUROPÄISCHE PATENTSCHRIFT

(11) **EP 1 752 675 B1**
(45) Veröffentlichungstag und Bekanntmachung des Hinweises auf die Patenterteilung: **20.01.2010**
(21) Anmeldenummer: 06013943.3
(22) Anmeldetag: 05.07.2006
(51) Int. Cl.: F16D 65/092, F16D 69/04

(54) **Scheibenbremsbelag mit Trägerplatte und Verfahren zu dessen Herstellung**
Disc brake pad with a carrier plate and a method of its manufacture
Plaquette de frein à disque avec une plaque de support et son procédé de fabrication

(30) Priorität: 12.08.2005 DE 102005038299
(43) Veröffentlichungstag der Anmeldung: 14.02.2007
(73) Patentinhaber: Federal-Mogul Friction Products GmbH, 65520 Bad Camberg (DE)
(72) Erfinder: Emmett, Robert, 56477 Rennerod (DE); Strauss, Wilfried, 69483 Wald-Michelbach (DE)
(74) Vertreter: Becker Kurig Straus

(56) Entgegenhaltungen:
- EP-A- 1 359 339
- WO-A-99/64762
- FR-A- 683 029
- FR-A- 842 684
- US-A- 5 141 083

## Beschreibung

Die vorliegende Erfindung betrifft einen Scheibenbremsbelag und ein Verfahren zu dessen Herstellung. Bei der Herstellung von Bremsbelägen ist bekannt, den Reibbelag auf eine Trägerplatte zu pressen, zwischen Trägerplatte und Reibbelag eine Klebeschicht vorzusehen, um die Haftung zwischen Reibbelag und Trägerplatte zu erhöhen oder den Reibbelag direkt auf die Trägerplatte zu spritzen. Die durch den Klebstoff erzielbare Haftung zwischen einem Reibbelag und einer Trägerplatte ist jedoch bei hoch belasteten Bremsbelägen für beispielsweise Nutzfahrzeuge insbesondere aufgrund der hohen Bremstemperaturen, die auftreten können, nicht ausreichend.

Zur Erhöhung der Haftung des Reibbelags auf der Oberfläche der Trägerplatte sind bereits diverse Umformungen der Oberfläche der Trägerplatte vorgeschlagen worden.

### Stand der Technik

In dem Dokument DE 3843901 ist eine mit einem Reibbelag bestückte Trägerplatte offenbart, die auf der für die Befestigung des Reibbelags bestimmten Oberfläche Einkerbungen mit Hinterschneidungen aufweist, in die das Reibmaterial zur Haftungserhöhung eindringen kann. Da sich das Reibmaterial in der Trägerplatte verankert, wird die maximale Scherfestigkeit von den Eigenschaften des Reibmaterials begrenzt.
In der US3767018 ist offenbart, dass der Reibbelag mit Hilfe von Nieten auf der Trägerplatte verankert werden kann.
Aus der Druckschrift US 4569424 ist bekannt, Laschen aus der Trägerplatte hochzubiegen, wodurch die Kontaktoberfläche zwischen der Trägerplatte und dem Reibbelag erhöht werden kann.

Aus der Druckschrift US 1336752 ist es ebenfalls bekannt die Laschen ringförmig (ähnlich einer Küchenreibe hochzufalten, sodass vier, im wesentlichen ringförmige, ausgerissene Laschen entstehen, die in ein Reibmaterial beispielsweise eines Bremsbandes gedrückt werden können. Dazu müssen den laschen im Wesentlichen senkrecht nach oben gebogen werde, da sonst die Gefahr besteht, dass die Laschen beim Eindrücken des Reibmaterials nur umgebogen werden. Das Dokument US 1336752 verwendet dazu lediglich runde und zylindrische Lochstempel.

Eine gattungsgemäße Scheibenbremse ist aus der FR 842 684 bekannt.

Die Aufgabe der vorliegenden Erfindung besteht darin, die bekannten Strukturierungsverfahren weiter zu verbessern, so dass die Verbindung zwischen einem Reibbelag und einer Trägerplatte verbessert werden kann und um einen Scheibenbremsbelag mit einer verbesserten Haftung zwischen Reibbelag und Trägerplatte bereitzustellen.

Gemäß einem Aspekt der vorliegenden Erfindung wird ein Verfahren zur Herstellung eines Scheibenbremsbelages gemäß Anspruch 1 bereitgestellt.Dadurch kann ein Formschluss zwischen dem Reibbelagmaterial und der Trägerplatte durch das Material, das sich hinter den Stanzgrat legt und die Stanzlöcher ausfüllt, erreicht werden.

Bevorzugt wird die Reibbelagschicht angespritzt, beispielsweise durch ein Spritzgussverfahren an die Trägerplatte angeformt.

Vorzugsweise wird die Reibbelagschicht durch Ansintern oder in anderes Heißpressverfahren an die Trägerplatte angeformt.

Bevorzugt weist der sich konisch verjüngende Lochstempel einen Kegelwinkel von 15° bis 25° bevorzugter zwischen 15 und 20° auf. Durch einen derartigen Lochstempel kann an der Austrittsstelle des Lochstempels ein relativ kleiner Stanzgrat erzeugt werden, der nicht, eingerissen ist. Die Erfindung basiert darauf, dass eine relativ kleine Struktur an der Verbindungsfläche zum Bremsbelag erzeugt wird, ohne dass die Trägerplatte tatsächlich umgebogen wird. Der Stanzgrat wird nicht durch einen Beigevorgang sondern durch einen Fließvorgang bzw. Drückvorgang in der Trägerplatte erzeugt, was daran zu erkennen ist das der Stanzgrat in seinen Abmessungen kleiner als die Dicke der Trägerplatte ist.

Vorzugsweise wird der sich konisch verjüngende Lochstempel nur soweit in die Trägerplatte getrieben wird, dass der Durchmesser der Lochung an der Austrittsseite des Lochstempels kleiner ist als die halbe Dicke der Trägerplatte. Dadurch kann sichergestellt werden, dass die Abmessungen des Stanzgrats (ausgenommen der Durchmesser der ringförmigen Struktur) keiner sind als die Dicke der Trägerplatte.

Gemäß einem anderen Aspekt der vorliegenden Erfindung wird ein Scheibenbremsbelag gemäß Anspruch 6 bereitgestellt. Dadurch kann bei einer geringen Höhe der Stanzgrate ein zweifacher Formschluss erreicht werden, der dazu beitragen kann, das Problem von sich von der Trägerplatte ablösenden Reibbelägen zu vermindern oder zu lösen.

Vorzugsweise ist die Reibbelagschicht an die Trägerplatte anspritzt.

Bevorzugt ist die Reibbelagschicht an die Trägerplatte angepresst bzw. angesintert.

Vorteilhafterweise weisen die runden konischen Stanzlöcher einen Kegelwinkel zwischen 20° bis 25° auf.

Bevorzugt ist der Durchmesser der runden konischen Stanzlöcher (d.h der kleinste Durchmesser, bzw. der Durchmesser an der Austrittsstelle des Lochstempels) an der Seite mit dem Stanzgrat kleiner ist als die halbe Dicke der Trägerplatte.
Figur 1 zeigt einen Querschnitt einer herkömmlichen Scheibenbremse mit einer Aufsicht auf einen herkömmlichen Bremsbelag.
Figur 2 zeigt einen Querschnitt des herkömmlichen Bremsbelags aus Figur 1.
Figur 3 zeigt eine Querschnittsansicht eines erfindungsgemäßen Bremsbelags.
Figur 4 zeigt eine Aufsicht auf eine Trägerplatte eines erfindungsgemäßen Bremsbelags mit sichtbaren Löchern und sichtbaren Stanzgraten.

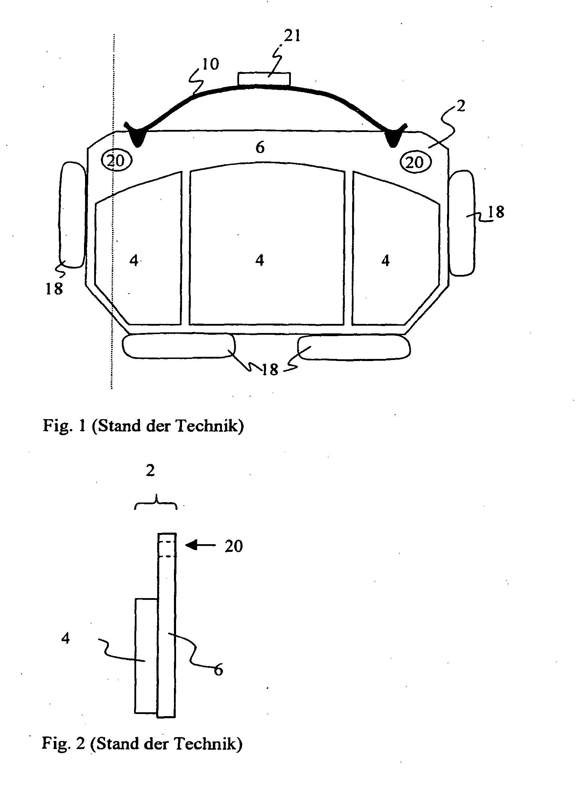

Figur 1 zeigt einen herkömmlichen Bremsbelag. Der Bremsbelag 2 weist eine Trägerplatte 6, und Reibbeläge 4 auf. An der Trägerplatte 6 ist eine Niederhaltefeder 10 angeklemmt. Die Niederhaltefeder 10 ist als eine Blattfeder dargestellt. Die Niederhaltefeder 10 dient dazu, zu verhindern, dass der Bremsbelag 2 bei Bewegungen des Fahrwerks gegen die Führungen 18, 20 des Belagschachts eines Bremssattels schlägt und diese beschädigt. Die in der Zeichnung dargestellte Blattfeder 10 stützt sich an einem Verriegelungselement 21 ab. Die Trägerplatte 6 weist außerdem Aufnahmeelemente 20 für Haltebolzen auf. Der Bremsbelag wird durch Belagsführungen gehalten, die verhindern, dass der Bremsbelag seitlich oder nach unten herausrutschen kann.

Figur 2 zeigt einen Querschnitt des herkömmlichen Bremsbelags aus Figur 1. Es sind Trägerplatte 6, und Reibbeläge 4 klar zu erkennen. Die Niederhaltefeder ist nicht dargestellt. Die Aufnahmeelemente 20 für Haltebolzen in der Trägerplatte 6 sind ebenfalls bei 20 angedeutet.

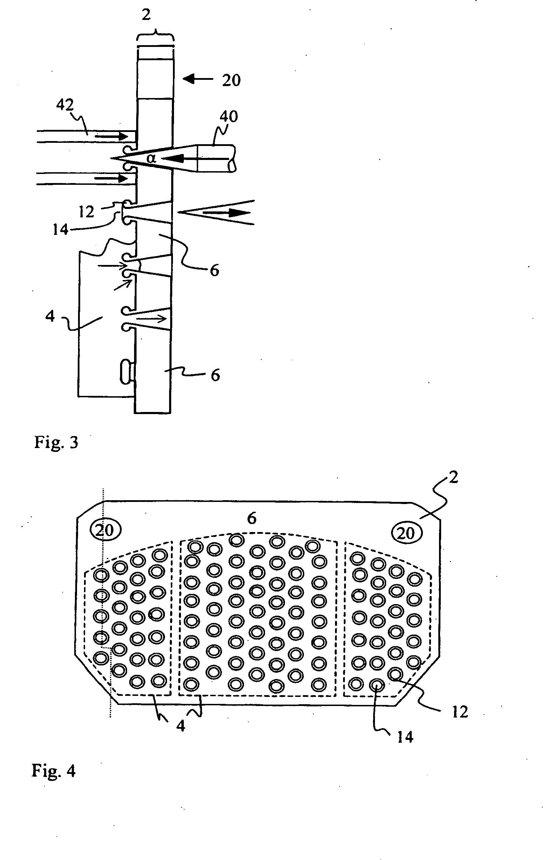

Figur 3 zeigt eine Querschnittsansicht eines erfindungsgemäßen Bremsbelags. Figur 3 verdeutlicht ebenfalls eine Ausführungsform des erfindungsgemäßen Herstellungsverfahrens. Grundsätzlich zeigt Figur 3 den gleichen Schnitt durch einen Bremsbelag, wie er beispielsweise in Figur 2 dargestellt ist, mit einem Reibbelag 4, einer Trägerplatte 6 und Aufnahmeelementen 20 für Haltebolzen.

An der oberen Seite der Trägerplatte ist dargestellt, wie ein runder konischer Lochstempel bzw. ein Lochdorn ein konisches Loch in die Trägerplatte stanzt bzw. drückt. Die Kräfte werden dabei durch einen Gegenhalter 42 aufgenommen, der verhindert, dass sich die Trägerplatte 6 beim Stanzen durchbiegen kann.

An dem zweiten Stanzloch von oben ist zu erkennen, wie der Lochstempel bzw. Lochdorn wieder aus der dem konischen Loch in die Trägerplatte herausgezogen wird. Das konische Loch 14 weit dabei an der Austrittsstelle des Lochdorns einen ringförmigen Stanzgrat 12 mit Hinterschneidungen auf

In dem mittleren konischen Loch 14 wird verdeutlicht wie das Material des Reibbelags um den Stanzgrat und in die konischen Löcher 14 eingespritzt bzw. eingepresst wird.

In dem zweiten konischen Loch von unten ist dargestellt, dass das Material des Reibbelags das ganze konische Loch ausfüllt.

Das unterste konische Loch ist als eine Seitenansicht dargestellt, an der die Hinterschneidung die außen an dem Stanzgrat besteht hervorgehoben ist.

Figur 4 zeigt eine Aufsicht auf eine Trägerplatte eines erfindungsgemäßen Bremsbelags mit sichtbaren Löchern und sichtbaren Stanzgraten. Figur 4 zeigt eine Trägerplatte eines Bremsbelags mit der äußeren Form des in der Figur 1 dargestellten Bremsbelags. Die Stellen, an die später die Reibbelagsschicht angeformt wird, sind durch gestrichelte Linien 4 angedeutet. In dem Bereich der gestrichelten Linien 4 sind konische Löcher 14 angebracht, die von Gussgraten 12 eingefasst sind. Durch Füllen der Löcher und umgreifen der Stanzgrate kann ein angeformter Reibbelag sich durch zwei verschiedene Formschlüsse an der Trägerplatte befestigt werden. Durch die Verwendung von kleinen Löchern und kleinen Strukturen können sehr viele konische Löcher und damit Stanzgrate an der Trägerplatte angebracht bzw. in die Trägerplatte eingebracht werden.

Die Scheibenbremse, der Bremssattel und der Bremsbelag können in jedem technischen Gebiet eingesetzt werden, in dem Drehbewegungen verzögert werden sollen, nämlich in sämtlichen automotiven Anwendungen, in Land-, Schienen-, Wasser-, Luftfahrzeugen, in denen Wellen und Räder abgebremst werden müssen. Weitere Anwendungen sind Bremsen für Maschinen, Motoren, Rotoren, Windräder, Fahrgeschäfte und so weiter.

## Patentansprüche

1. Verfahren zur Herstellung eines Scheibenbremsbelages (2), umfassend
- Bereitstellen einer Trägerplatte (6);
**gekennzeichnet durch**
- Lochen der Trägerplatte (6) mit mindestens einem im Querschnitt runden und in Lochungsrichtung sich konisch verjüngenden Lochstempel (40), so dass runde konische Stanzlöcher (14) in der Trägerplatte (6) gebildet werden, die an der Austrittsseite des mindestens einen Lochstempels einen ringförmigen Stanzgrat (12) aufweisen; und
- Anformen einer Reibbelagschicht (4) auf die Seite der Trägerplatte (6), die die Stanzgrate (12) aufweist, so dass sich das Reibbelagsmaterial (4) sowohl formschlüssig hinter die Stanzgrate (12) legt als auch die konischen runden Stanzlöcher (14) formschlüssig ausgefüllt werden.

2. Verfahren gemäß Anspruch 1, **dadurch gekennzeichnet, dass** die Reibbelagschicht (4) durch Anspritzen an die Trägerplatte (6) angeformt wird.

3. Verfahren gemäß Anspruch 1, **dadurch gekennzeichnet, dass** die Reibbelagschicht (4) durch Anpressen bzw. Ansintern an die Trägerplatte (6) angeformt wird.

4. Verfahren gemäß einem der Ansprüche 1 bis 3, **dadurch gekennzeichnet, dass** der mindestens eine, sich konisch verjüngende Lochstempel (40) einen Kegelwinkel (α) von 20° bis 25° aufweist.

5. Verfahren gemäß einem der Ansprüche 1 bis 4, **dadurch gekennzeichnet, dass** der sich konisch verjüngende Lochstempel (40) nur soweit in die Trägerplatte (6) getrieben wird, so dass der Durchmesser der Lochung (14) an der Austrittsseite des Lochstempels (40) kleiner ist als die halbe Dicke der Trägerplatte (60).

6. Scheibenbremsbelag (2), umfassend
- eine Trägerplatte (6) mit runden, konisch ausgebildeten Stanzlöchern (14), wobei die Trägerplatte (6) an der Seite der Löcher mit dem kleineren Durchmesser einen ringförmigen Stanzgrat (12) aufweisen; und
- eine Reibbelagschicht (4), die auf die Seite der Trägerplatte (6) mit den Stanzgraten (12) angeformt ist, wobei sich das Reibbelagsmaterial (4) formschlüssig hinter die Stanzgrate (12) erstreckt und die konischen runden Stanzlöcher (14) vollständig ausfüllt.

7. Scheibenbremsbelag gemäß Anspruch 6, **dadurch gekennzeichnet, dass** die Reibbelagschicht (4) an die Trägerplatte (6) anspritzt ist.

8. Scheibenbremsbelag gemäß Anspruch 6, **dadurch gekennzeichnet, dass** die Reibbelagschicht (4) an die Trägerplatte (6) angepresst bzw. angesintert ist.

9. Scheibenbremsbelag gemäß einem der Ansprüche 6 bis 8, **dadurch gekennzeichnet, dass** die runden konischen Stanzlöcher (14) einen Kegelwinkel (α) zwischen 20° bis 25° aufweisen.

10. Scheibenbremsbelag gemäß einem der Ansprüche 6 bis 9, **dadurch gekennzeichnet, dass** der Durchmesser der runden konischen Stanzlöcher (14) an der Seite der Trägerplatte (6) mit dem Stanzgrat (12) kleiner ist als die halbe Dicke der Trägerplatte (6).

## Claims

1. Method for manufacturing a disc brake pad (2), comprising
- providing a carrier plate (6);
**characterized by**
- punching the carrier plate (6) with at least one punching die (40) having a round cross section and conically tapering in punching direction such that round conical punching holes (14) are formed in the carrier plate (6) which comprise a ring-shaped punching burr (12) at the exit side of the at least one punching die; and
- forming a friction lining layer (4) onto the side of the carrier plate (6) comprising the punching burrs (12) such that the friction lining material (4) lays behind the punching burrs (12) in a form-fitting manner as well as the conical round punching holes (14) are filled in a form-fitting manner.

2. Method according to claim 1, **characterized in that** the friction lining layer (4) is formed onto the carrier plate (6) by injection moulding.

3. Method according to claim 1, **characterized in that** the friction lining layer (4) is formed by pressing and sintering, respectively, onto the carrier plate (6).

4. Method according to one of claims 1 to 3, **characterized in that** the at least one conically tapering punching die (40) has an angle of taper (α) of 20° to 25°.

5. Method according to one of claims 1 to 4, **characterized in that** the conically tapering punching die (40) is driven into the carrier plate (6) only so far that the diameter of the punching (14) at the exit side of the punching die (40) is smaller than half the thickness of the carrier plate (6).

6. Disc brake pad (2), comprising
- a carrier plate (6) with round conically formed punching holes (14), wherein the carrier plate (6) comprises a ring-shaped punching burr (12) at the side of the holes with the smaller diameter; and
- a friction lining layer (4) which is formed onto the side of the carrier plate (6) with the punching burrs (12), wherein the friction lining material (4) extends behind the punching burrs (12) in a form-fitting manner and completely fills the conical round punching holes (14).

7. Disc brake pad according to claim 6, **characterized in that** the friction lining layer (4) is moulded onto the carrier plate (6).

8. Disc brake pad according to claim 6, **characterized in that** the friction lining layer (4) is pressed and sintered, respectively, onto the carrier plate (6).

9. Disc brake pad according to one of claims 6 to 8, **characterized in that** the round conical punching holes (14) have an angle of taper (α) between 20° to 25°.

10. Disc brake pad according to one of claims 6 to 9, **characterized in that** the diameter of the round conical punching holes (14) at the side of the carrier plate (6) with the punching burr (12) is smaller than half the thickness of the carrier plate (6).

## Revendications

1. Procédé de fabrication d'une plaquette de frein à disque (2), comprenant
- la mise à disposition d'une plaque support (6);
**caractérisé en ce qu'**il comprend les étapes suivantes :
- perçage de la plaque support (6) à l'aide d'au moins un poinçon (40) de section transversale ronde et s'effilant dans le sens de la perforation de manière à former, dans la plaque support (6), des trous poinçonnés (14) ronds de forme conique qui présentent, du côté sortie du au moins un poinçon, une bavure de poinçonnage (12) circulaire; et
- formation d'une couche de garniture de friction (4) sur le côté de la plaque support (6) qui présente les bavures de poinçonnage (12), de façon que non seulement le matériau de garniture de friction (4) se place en complémentarité de forme derrière les bavures de poinçonnage (12) mais également les trous poinçonnés (14) ronds de forme conique sont remplis en complémentarité de forme.

2. Procédé selon la revendication 1, **caractérisé en ce que** la couche de garniture de friction (4) est formée par injection sur la plaque support (6).

3. Procédé selon la revendication 1, **caractérisé en ce que** la couche de garniture de friction (4) est formée par pression ou frittage sur la plaque support (6).

4. Procédé selon l'une des revendications 1 à 3, **caractérisé en ce que** le au moins un poinçon conique (40) présente un angle au sommet (α) de 20° à 25°.

5. Procédé selon l'une des revendications 1 à 4, **caractérisé en ce que** le poinçon conique (40) n'est poussé dans la plaque support (6) que dans la mesure où le diamètre de la perforation (14) du côté sortie du poinçon (40) est plus petit que la demi-épaisseur de la plaque support (6).

6. Plaquette de frein à disque (2), comprenant
- une plaque support (6) munie de trous poinçonnés (14) ronds de forme conique, la plaque support (6) présentant, sur le côté des trous ayant le plus petit diamètre, une bavure de poinçonnage (12) circulaire; et
- une couche de garniture de friction (4) formée sur le côté de la plaque support (6) comportant les bavures de poinçonnage (12), le matériau de garniture de friction (4) s'étendant en complémentarité de forme derrière les bavures de poinçonnage (12) et remplissant complètement les trous poinçonnés (14) ronds coniques.

7. Plaquette de frein à disque selon la revendication 6, **caractérisée en ce que** la couche de garniture de friction (4) est injectée sur la plaque support (6).

8. Plaquette de frein à disque selon la revendication 6, **caractérisée en ce que** la couche de garniture de friction (4) est appliquée par pression ou frittée sur la plaque support (6).

9. Plaquette de frein à disque selon l'une des revendications 6 à 8, **caractérisée en ce que** les trous poinçonnés (14) ronds coniques présentent un angle au sommet(α) compris entre 20° et 25°.

10. Plaquette de frein à disque selon l'une des revendications 6 à 9, **caractérisée en ce que** le diamètre des trous poinçonnés (14) ronds coniques sur le côté de la plaque support (6) comportant la bavure de poinçonnage (12) est plus petit que la demi-épaisseur de la plaque support (6).
